# EUROPÄISCHE PATENTSCHRIFT

(11) **EP 2 862 691 B1**
(45) Veröffentlichungstag und Bekanntmachung des Hinweises auf die Patenterteilung: **23.03.2016**
(21) Anmeldenummer: 13004952.1
(22) Anmeldetag: 16.10.2013
(51) Int. Cl.: B29C 45/26, B29C 33/26, B29C 33/00, B29C 33/44, B29C 45/64, B29C 45/66, B29C 45/44

(54) **Spritzgießwerkzeug mit mehreren Kavitäten zur Herstellung von Rohren mit einem Bogenradius**
Injection mould with multiple cavities for manufacturing a bend pipe or elbow tube
Moule de moulage par injection avec plusieurs cavitées pour un tuyau coudé

(43) Veröffentlichungstag der Anmeldung: 22.04.2015
(73) Patentinhaber: Ifw Manfred Otte GmbH, 4563 Micheldorf (AT)
(72) Erfinder: Demmel, Andreas, A-4694 Ohlsdorf (AT)
(74) Vertreter: Landgraf, Elvira

(56) Entgegenhaltungen:
- EP-A1- 0 950 495
- EP-A1- 2 078 601
- JP-A- S5 173 562
- JP-A- S57 125 005
- US-A- 3 632 277

## Beschreibung

Die Erfindung betrifft ein Spritzgießwerkzeug zur Herstellung von Formteilen, wie Fittings und dergleichen mit einem Bogenradius von kleiner als 87,5°.

Spritzgießwerkzeuge zur Herstellung von Formteilen, wie Fittings oder Rohren mit einem Bogenradius weisen üblicherweise mehrere Kavitäten zum gleichzeitigen Formen der Werkstücke auf.

Dabei liegen bei den bisher bekannten Ausführungen die Achsen der Formkerne für die Herstellung der parallel zur Formtrennebene, wobei die Kerne beim Öffnen bzw. Schließen der Werkzeugform eine Bewegung parallel zur Formtrennebene ausführen.

Dadurch werden die Werkzeuge bei einer Ausführung mit mehreren Kavitäten sehr groß. Auch die dazu benötigten Spritzgießmaschinen müssen aufgrund der benötigten Aufspannplattengröße größer gewählt werden. Dies führt wiederum zu erhöhten Produktionskosten.

Diese Ausführungsform hat weiterhin den großen Nachteil, dass die Angusswege sehr lang sind und dadurch der Spritzdruck erheblich ansteigt bzw. die Kavitäten gar nicht oder nur sehr schwer gefüllt werden können.
Dies kann nur durch kostspielige Heißkanalsysteme verbessert werden. Bei der Herstellung von Fittingen aus PVC ist der Einsatz eines Heißkanalsystems nur bedingt möglich da durch die längeren Angusswege eine höhere Scherung des Materials auftritt und das Material dadurch geschädigt wird. Ein Vorteil der neuen Werkzeugausführung ist dass die Weglänge der Angüsse verkürzt wird und dadurch auch bei scherempfindlichen Materialien wie bspw. PVC der Einsatz eines Heißkanalsystems möglich ist.

Eine derartige Ausführungsform ist beispielsweise in EP 2 332 713 A1 offenbart. Dabei liegen in Fig. 1 die Achsen (66, 67) in der Formtrennebene, Öffnungs- und Schließbewegung erfolgt in Blickrichtung (also senkrecht) zur Darstellungsebene.

Aufgabe der Erfindung ist es daher ein Spritzgießwerkzeug zur Herstellung von Fittings oder Rohren mit einem Bogenradius von kleiner 87,5° bereitzustellen, das eine kompakte Bauweise ermöglicht und dabei gleichzeitig kurze Angusswege aufweist.

Gegenstand der Erfindung ist daher ein Spritzgießwerkzeug mit mehreren Kavitäten zur Herstellung von Fittings und Rohren mit einem Bogenradius von kleiner als 87.5°, umfassend eine Außenform mit 2 Formteilen, die in der Formtrennebene getrennt werden, mehreren im Wesentlichen parallel zueinander angeordneten Kavitäten, in denen jeweils ein Formkerne geführt werden, dadurch gekennzeichnet, dass die Achsen der Formkerne jeweils im Wesentlichen senkrecht zur Formtrennebene ausgerichtet sind, wobei jeweils eine Achse der Formkerne in Richtung der Öffnungsbewegung des .Werkzeugs situiert ist und die andere Achse derart situiert ist, dass sie bei der Entformung des Fittings oder Rohres in eine Position senkrecht zur Formtrennebene gedreht wird.

Durch eine zur Formtrennebene senkrechte Anordnung der Formkerne, können die Kavitäten näher aneinander situiert werden und die Werkzeuggröße deutlich verringert werden.
Auch die Angusswege können dann entsprechend gestaltet werden und sind in der Regel deutlich kürzer als bei nach dem oben beschriebenen Stand der Technik bekannten Ausführungen.

Die Reduktion der projizierten Fläche durch diese Anordnung führt auch zu geringeren Zuhaltekräften auf der Maschine, deshalb ist es möglich eine kleinere und dadurch kostengünstigere Spritzgießmaschine zu verwenden.

Durch die erfindungsgemäße Ausführung können nun auch Werkzeuge mit Spreizkern für Fittings mit weniger als 87,5° (z.B.: 67,5°-, 45°-; 30°- und 15°-Werkzeuge) senkrecht zur Formtrennebene eingeformt werden. Fachzahlen von 2 oder mehr Kavitäten können dadurch relativ leicht realisiert werden.

Aufgrund der kurzen Angusswege kann das erfindungsgemäße Spritzgießwerkzeug auch für kritische Materialien wie C-PVC eingesetzt werden, der Einsatz eines Heißkanals ist nicht unbedingt erforderlich, aber dennoch möglich aufgrund der geringeren Angussweglänge.

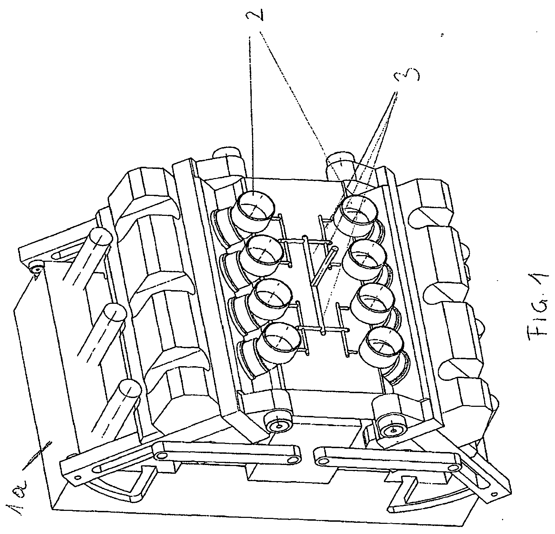

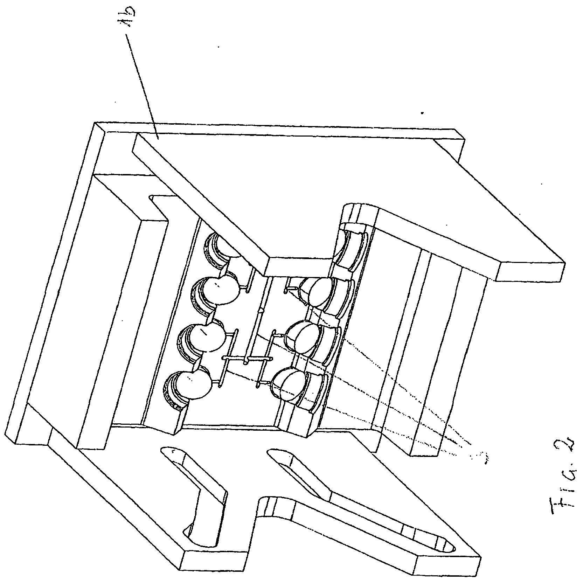

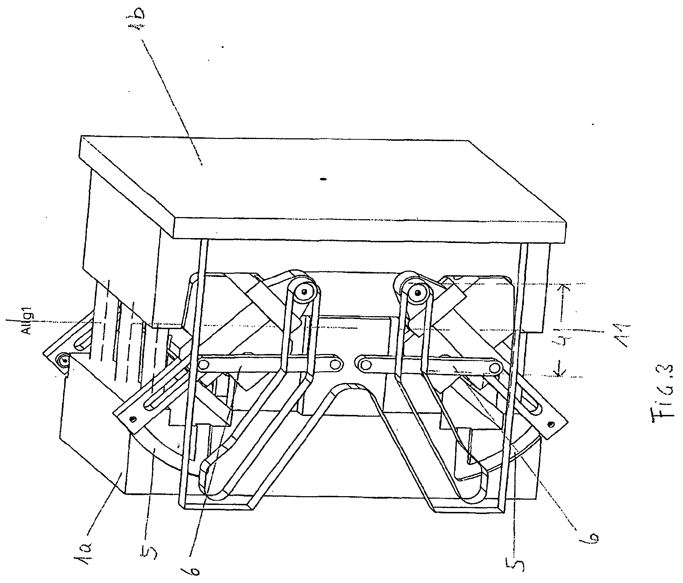

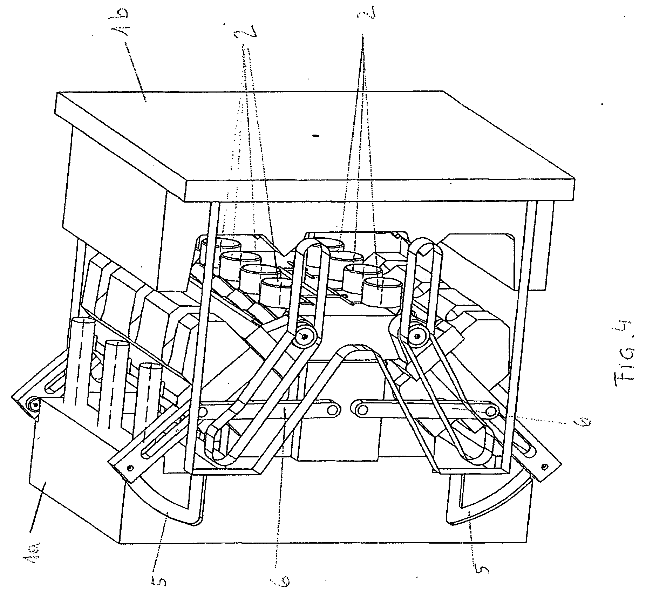

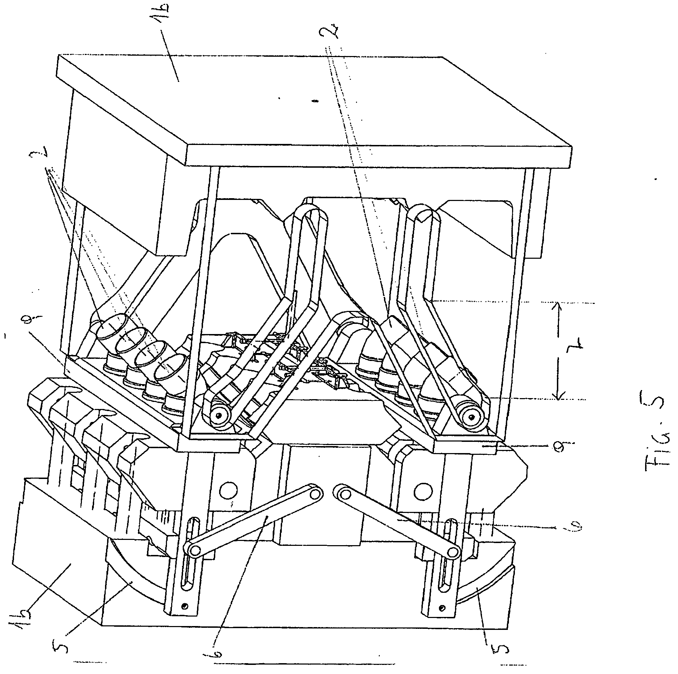

In den Figuren 1 bis 6 ist ein erfindungsgemäßes Spritzgießwerkzeug dargestellt.

Darin bedeuten
- 1: die Außenform,
- 1 a und 1 b: die beiden Außenformteile,

- 2: Werkstücke
- 3: Angusskanäle

- 4: den Öffnungshub ohne Drehbewegung
- 5: Kurvenbahn
- 6: Hebel zur Anlenkung der Kupplung

- 7: die Drehbewegung durch die Kulisse
- 8: Kurvenrollen

- 9.: Abstreifplatten
- 10: Kupplung für die Spreizkernbetätigung
- 11: Formtrennebene

In Figur 1 ist die auswerferseitige Ansicht des Spritzgießwerkzeug s dargestellt.

In Figur 2 ist die düsenseitige Ansicht des Spritzgießwerkzeugs dargestellt.

Figur 3 zeigt das erfindungsgemäße Spritzgießwerkzeug in geschlossenem Zustand.

In Figur 4 ist das erfindungsgemäße Spritzgießwerkzeug nach Entformung auf der Düsenseite dargestellt.
Dabei findet im ersten Bereich des Öffnungshubs 4 eine geradlinige Bewegung statt, es findet keine Drehbewegung statt und der düsenseitige Bereich wird in Öffnungsrichtung entformt.

In Figur 5 erfolgt gleichzeitig mit einer Drehbewegung 7, welche durch die Kulissenbahnen gesteuert wird, das Einklappen des Spreizkerns.

Der Spreizkern wird dabei durch das Ziehen einer Kupplung 10 eingeklappt. Die Kupplung 10 wird in diesem Fall durch einen Anlenkungshebel 6betätigt.Dies kann bei Fittings mit geringen Winkel auch durch zusätzliche Hydraulikzylinder oder durch eine zusätzliche Kulissenbahn betätigt erfolgen.

Durch das Herausdrehen des Teils aus der Kavität kann die Entformung des Bauteils direkt in Öffnungsrichtung des Werkzeuges erfolgen. Der spezielle Hebelmechanismus kombiniert die Herausdrehbewegung des Fittings mit der Entformung des Spreizkernes

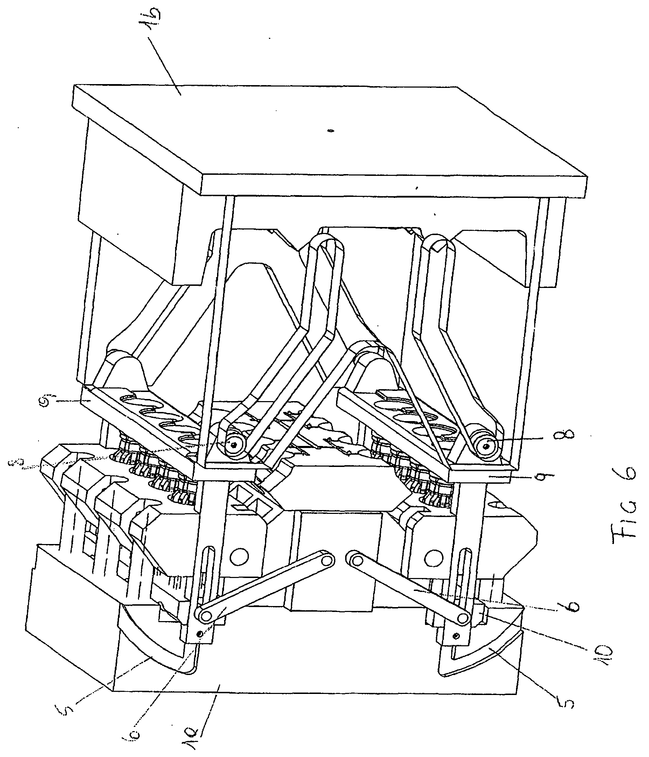

In Figur 6 ist das Entformen auf der Auswerferseite dargestellt. Bei einem definierten Öffnungshub schlagen die Kurvenrollen in der Kulisse am Ende der Führungsbahn an. Dies bewirkt ein Mitziehen der Abstreifplatten, was wiederum zum Entformen der Spritzgießteile vom auswerferseitigen Kern zur Folge hat.

Das Schließen des Werkzeugs nach dem Entformen der Werkstücke erfolgt auf folgende Weise.
Die Kurvenbahnen 5 in der auswerferseitigen Grundplatte dienen dazu, dass beim Schließen des Werkzeuges zuerst die Abstreifplatte 9 zurückgeschoben wird und erst dann die Drehbewegung der Kernpakete erfolgt.

Es ist auch eine Ausführung des Formteils mit 2 Sicken möglich, wobei dann die Sicke düsenseitig über Klammern bzw. Backen. entformt wird.

## Patentansprüche

1. Spritzgießwerkzeug mit mehreren Kavitäten zur Herstellung von Werkstücken wie Fittings und Rohren mit einem Bogenradius von kleiner als 87.5°, umfassend eine Außenform mit 2 Formteilen, die in der Formtrennebene getrennt werden, mehreren im Wesentlichen parallel zueinander angeordneten Kavitäten, in denen jeweils ein Formkerne geführt werden, **dadurch gekennzeichnet, dass** die Achsen der Formkerne jeweils im Wesentlichen senkrecht zur Formtrennebene ausgerichtet sind, wobei jeweils eine Achse der Formkerne in Richtung der Öffnungsbewegung des .Werkzeugs situiert ist und die andere Achse derart situiert ist, dass sie bei der Entformung des Fittings oder Rohres in eine Position senkrecht zur Formtrennebene gedreht wird.

2. Spritzgießwerkzeug nach Anspruch 1, **dadurch gekennzeichnet, dass** die Entformung düsenseitig und auswerferseitig in Öffnungsrichtung des Werkzeugs erfolgt.

3. Spritzgießwerkzeug nach einem der Ansprüche 1 oder 2, **dadurch gekennzeichnet, dass** bei der auswerferseitigen Entformung die Achse des Formkerns senkrecht zur Formtrennebene gedreht wird und gleichzeitig der Formkern eingeklappt wird.

4. Spritzgießwerkzeug nach einem der Ansprüche 1 bis 3, **dadurch gekennzeichnet, dass** das Einklappen des Formkerns durch eine Kupplung die über einen Anlenkhebel gesteuert wird, erfolgt.

5. Spritzgießwerkzeug nach einem der Ansprüche 1 bis 4, **dadurch gekennzeichnet, dass** bei Schließen des Spritzgießwerkzeugs über eine Bewegung über eine vorgegebene Kurvenbahn die Abstreifplatten zurückgezogen und anschließend das Spritzgießwerkzeug geschossen wird.

## Claims

1. Injection mould with multiple cavities for manufacturing workpieces such as fittings and pipes with a bend radius of less than 87.5°, comprising an outer mould with two mould parts, which are parted in the mould parting plane, multiple cavities which are arranged substantially parallel to one another and in which mould cores are respectively guided, **characterized in that** the axes of the mould cores are respectively aligned substantially perpendicularly in relation to the mould parting plane, wherein one axis of the mould cores is respectively situated in the direction of the opening movement of the mould and the other axis is situated in such a way that during the demoulding of the fitting or pipe it is turned into a position perpendicularly in relation to the mould parting plane.

2. Injection mould according to Claim 1, **characterized in that** the demoulding takes place on the nozzle side and the ejector side in the opening direction of the mould.

3. Injection mould according to either of Claims 1 and 2, **characterized in that**, in the ejector-side demoulding, the axis of the mould core is turned perpendicularly in relation to the mould parting plane and at the same time the mould core is swung in.

4. Injection mould according to one of Claims 1 to 3, **characterized in that** the swinging in of the mould core is performed by a coupling which is controlled by way of an articulating lever.

5. Injection mould according to one of Claims 1 to 4, **characterized in that**, when closing the injection mould by way of a movement over a predetermined curve path, the stripper plates are withdrawn and the injection mould is then closed.

## Revendications

1. Outil de moulage par injection avec plusieurs cavités pour la fabrication de pièces telles que des raccords et des tubes avec un rayon de courbure inférieur à 87,5°, comprenant un moule extérieur avec deux parties de moule qui sont séparées dans le plan de séparation de moule, plusieurs cavités agencées sensiblement parallèlement les unes aux autres, dans lesquelles respectivement un noyau de moule est guidé, **caractérisé en ce que** les axes des noyaux de moule sont orientés respectivement sensiblement perpendiculairement au plan de séparation de moule, respectivement un axe des noyaux de moule étant situé en direction du mouvement d'ouverture de l'outil et l'autre axe étant situé de telle manière qu'il soit tourné lors du démoulage du raccord ou du tube dans une position perpendiculaire au plan de séparation de moule.

2. Outil de moulage par injection selon la revendication 1, **caractérisé en ce que** le démoulage est effectué côté buse et côté éjecteur dans le sens d'ouverture de l'outil.

3. Outil de moulage par injection selon l'une quelconque des revendications 1 ou 2, **caractérisé en ce que** lors du démoulage côté éjecteur, l'axe du noyau de moule est tourné perpendiculairement au plan de séparation de moule et le noyau de moule est rabattu simultanément.

4. Outil de moulage par injection selon l'une quelconque des revendications 1 à 3, **caractérisé en ce que** le rabattement du noyau de moule est effectué par un couplage qui est commandé par un levier d'articulation.

5. Outil de moulage par injection selon l'une quelconque des revendications 1 à 4, **caractérisé en ce que** lors de la fermeture de l'outil de moulage par injection par un mouvement sur une piste courbe prescrite, les plaques de raclage sont retirées et l'outil de moulage par injection est ensuite fermé.
